# EUROPEAN PATENT SPECIFICATION

(11) **EP 4 106 595 B1**
(45) Date of publication and mention of the grant of the patent: **08.10.2025**
(21) Application number: 21712559.0
(22) Date of filing: 18.02.2021
(51) Int. Cl.: A47L 13/17, A47L 13/19

(54) **A RESERVOIR OR POUCH, IN USE, BONDED OR CONNECTED TO A SPONGE OR WASHING/CLEANING APPLICATOR MEANS**
BEHÄLTER ODER BEUTEL, VERBUNDEN ODER VERBUNDEN MIT EINEM SCHWAMM ODER EINEM WASCH-/REINIGUNGSAPPLIKATOR
RÉSERVOIR OU POCHE RELIÉ EN UTILISATION À UNE ÉPONGE OU À UN MOYEN APPLICATEUR D'AGENT DE LAVAGE/NETTOYAGE

(30) Priority: 20.02.2020 GB 202002462
(43) Date of publication of application: 28.12.2022
(73) Proprietor: Kudhail, Jagjeet Singh, Sutton Coldfield B74 3HR (GB)
(72) Inventor: Kudhail, Jagjeet Singh, Sutton Coldfield B74 3HR (GB)
(74) Representative: Parker, Nigel Edward
(86) International application number: PCT/GB2021/000019
(87) International publication number: WO 2021/165633

(56) References cited:
- DE-B- 1 184 471
- JP-A- 2013 052 137
- US-A- 2 641 012
- US-A- 4 074 944
- US-A- 5 865 554

## Description

This invention relates to improvements in or relating to cleaning or washing aids and is more particularly concerned with a reservoir or pouch, in use, containing a cleaning, washing or treatment agent or material e.g. a cleansing liquid/fluid for use in domestic, medical or industrial applications.

US 4074944A shows a device 10 for dispensing a fluid from a housing 12 by means of a control rod 24 onto an applicator member such as a sponge.

There is disclosed herein a method of making a washing/cleaning aid comprising :-
1) Manufacturing a self-contained reservoir or pouch having an inlet and at least one outlet nozzle or valve.

There is disclosed herein a washing/cleaning aid or method having any feature/s or function/s derivable from this description and/or FIGURES of the drawings.

The pouch may be refillable or otherwise (re-usable or disposable) depending upon the intended use.

According to the present invention there is provided a reservoir or pouch, in use, bonded or connected to a sponge or washing/cleaning applicator means, said reservoir/ pouch having an inlet for receiving a cleansing or washing or treatment agent or material and at least one outlet nozzle or valve through which said agent/material may be dispensed and in which the reservoir/pouch has a hand grip portion that holds or secures the sponge/applicator means , said hand grip portion being provided with a recess or well for snugly receiving the sponge or washing/cleaning applicator means , and characterised in that the reservoir or pouch is flexible or collapsible on squeezing to help dispense the cleansing or washing or treatment agent/material from the reservoir/pouch from said at least one outlet nozzle or valve onto or into said sponge/applicator means .

In one embodiment, according to the present invention, advantageously, the reservoir/pouch has a hand grip portion that preferably removably secures the sponge/applicator means - squeezing the hand grip portion dispenses the cleansing or washing agent from the reservoir/pouch from said at least one outlet nozzle onto or into said sponge/applicator means.

The hand grip portion may be provided with a suitably sized recess or well for snugly receiving the sponge/applicator means (that may be an of the shelf product such as a rectangular, oval or circular sponge- possibly with an additional outer scourer layer). The recess/well will usually be located on the underside of the hand grip portion and/or the inlet will usually be located on an upper part of the reservoir/pouch. Said at least one outlet nozzle or valve will usually be on a lower part of the reservoir/pouch adjacent the sponge/applicator means.

The reservoir/pouch may be bonded or moulded to the hand grip portion. The reservoir/pouch may be manufactured as an integral one part unit or as a two part assembly (separate reservoir/pouch and hand grip parts). The reservoir/pouch may be replaceable on the hand grip portion.

The sponge/applicator means may be removable from the hand grip portion to allow replacement when worn out or dirty or may be permanently bonded thereto.

The hand grip portion may be made from any suitable material such as silicone or other plastics/elastomeric materials.

In an alternative embodiment according to the present invention, the reservoir/pouch is connected to an upper surface of a sponge/applicator means. The sponge/applicator means may be bonded to said upper surface. The sponge/applicator means may be any desired shape with the reservoir/pouch complementing said shape.

It is envisaged that the pouch/reservoir will usually be refillable with washing/cleansing agent although it is possible the pouch reservoir is not refillable and thus may not even be provided with an inlet separate to the outlet nozzle.

Advantageously, the reservoir/pouch is of a substantial size (perhaps 30% to 100% the volume of the sponge/applicator means) and/or spans (or perhaps 30% to 100%) substantially an upper surface of the sponge/applicator means. In this way, frequent filling of the pouch/reservoir with washing agent is avoided and, at least in some embodiments, dispensing of the washing agent can be accomplished in an easy, controlled manner, preferably, by simply squeezing or pressing the pouch/reservoir (and/or hand grip) rather than e.g. by pressing a control button to release agent (the provision of which may increase production costs and provide a reduction in controlled, responsive agent release). Even so, it is possible in some embodiments that, additionally , a control button is provided to release or help release said agent.

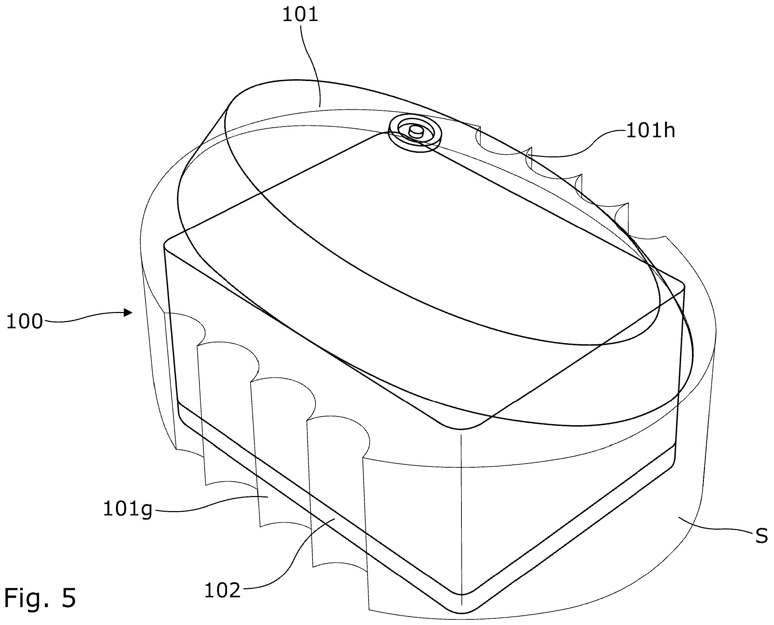

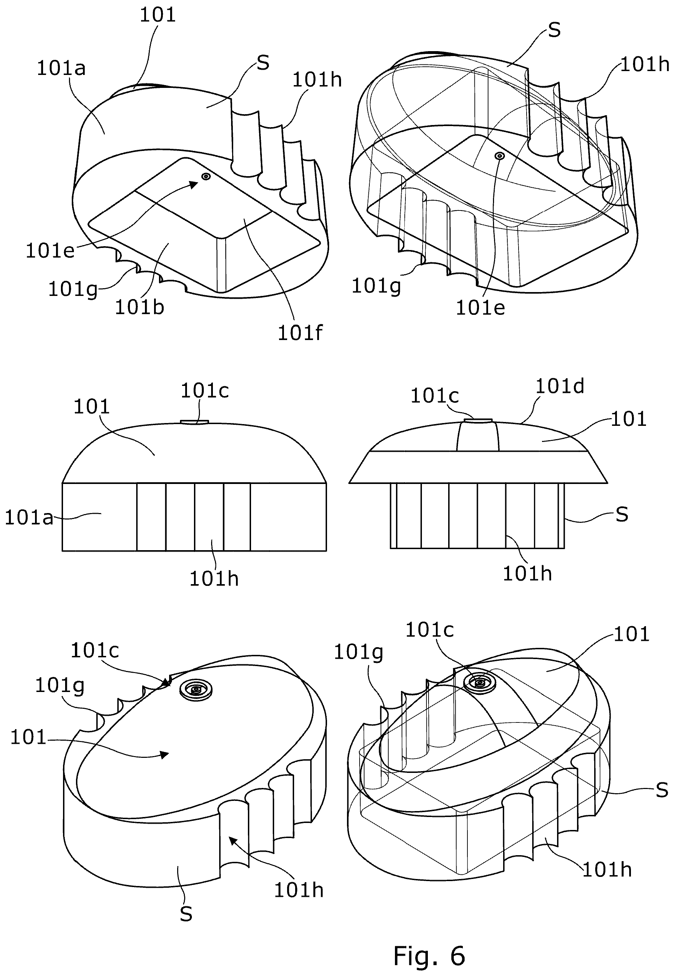

Further advantageous features of the present invention will be apparent from the following description and FIGURES 5 and 6 of the drawings.

An embodiment of a reservoir/pouch and sponge/applicator means in accordance with the present invention will now be described, by way of example only, with reference to the accompanying, somewhat schematic, FIGURES 5 and 6 of the drawings, in which:-
FIGURE 5 shows a perspective concept view of an embodiment in accordance with the present invention of a reservoir/pouch having a hand grip portion fitted with an off the shelf rectangular sponge, and
FIGURE 6 shows three line drawings, and three comparative concept views of the reservoir/pouch with hand grip portion all in accordance with the present invention.

FIGURE 5 shows an assembly 100 of an upper, oval shaped reservoir/pouch 101 bonded or moulded with a lower peripheral hand grip portion 101a having a rectangular well or recess 101b (see FIGURE 6) snugly receiving a standard dimension off the shelf rectangular sponge 102. Advantageously, reservoir/pouch 101 occupies a substantial volume in relation to sponge 102 to avoid the necessity of frequent filling with cleansing/washing agent.

Reservoir/pouch 101 has a centrally located inlet valve 101c (see FIGURE 6) on an upper surface 101d, for receiving a suitable cleansing/washing agent. The reservoir/pouch 101 is provided with a single outlet nozzle 101e, positioned on a lower surface 101f of the reservoir.

The hand grip portion 101a has a skirt S with opposed, vertical curved wall ribbing 101g and 101h that can be gripped and squeezed together to dispense agent from the reservoir/pouch 101 through outlet nozzle 101e into and through pores in the sponge 102, in a manner that should readily be envisaged.

Pouch/reservoir 101 substantially spans the upper surface of the sponge 102 to allow agent to be dispensed in a readily controlled manner upon squeezing.

The reservoir/pouch 101 and handgrip portion 101a may be manufactured integrally or as separate parts.

Sponge 102 may be replaceable once dirty or worn out.

Reservoir/pouch 101 and sponge 102 may be used with a separate glove on the hand if required. The sponge may be fitted with an additional scourer member (not shown).

It is possible the pouch and/or applicator means may be made from biodegradable material/s such as coconut fibre.

It is to be understood that the scope of the present invention is not to be unduly limited by the particular choice of terminology and that a specific term may be replaced or supplemented by an equivalent or generic term e.g. 'having' may be replaced by 'comprising' or 'including'. Further it is to be understood that individual features, method or functions or combinations thereof relating to the cleaning/washing aid/applicator means and/or pouch/reservoir might be patentably inventive. The singular may include the plural and vice versa.

Additionally, any range mentioned herein for any parameter or variable shall be taken to include a disclosure of any derivable sub-range within that range or of any particular value of the variable or parameter arranged within, or at an end of, the range or sub-range.

## Claims

1. A reservoir 101 or pouch, in use, bonded or connected to a sponge 102 or washing/cleaning applicator means, said reservoir/ pouch 101 having an inlet 101c for receiving a cleansing or washing or treatment agent or material and at least one outlet nozzle 101e or valve through which said agent/material may be dispensed and in which the reservoir/pouch 101 has a hand grip portion 101a that holds or secures the sponge/applicator means 102, said hand grip portion 101a being provided with a recess 101b or well for snugly receiving the sponge or washing/cleaning applicator means 102, and **characterised in that** the reservoir 101 or pouch is flexible or collapsible on squeezing to help dispense the cleansing or washing or treatment agent/material from the reservoir/pouch 101 from said at least one outlet nozzle 101e or valve onto or into said sponge/applicator means 102.

2. A reservoir/pouch as claimed in claim 1 **characterised in that** the sponge/applicator means is removably securable in the hand grip portion.

3. A reservoir/pouch as claimed in claim 1 or claim 2 **characterised in that** the recess/well is located on the underside of the hand grip portion.

4. A reservoir/pouch as claimed in claim 1 **characterised in that** the inlet is located on an upper part of the reservoir/pouch.

5. A reservoir/pouch as claimed claim 1 **characterised in that** said at least one outlet nozzle or valve is on a lower part of the reservoir/pouch adjacent the sponge/applicator means, in use.

6. A reservoir/pouch as claimed in claim 1 **characterised in that** the reservoir/pouch is bonded or moulded to the hand grip portion.

7. A reservoir/pouch as claimed in claim 1 **characterised in that** the reservoir/pouch is manufactured as an integral one part unit or as a two part assembly (separate reservoir/pouch and hand grip parts) said reservoir/pouch, preferably, being replaceable on the hand grip portion.

8. A reservoir/pouch as claimed in claim 1 **characterised in that** the sponge/applicator means is removable from the hand grip portion to allow replacement when worn out or dirty or is permanently bonded thereto.

9. A reservoir/pouch as claimed in claim 1 **characterised in that** the hand grip portion is made from silicone or other plastics/elastomeric materials.

10. A reservoir/pouch as claimed in claim 1 **characterised by**, in use, being connected to an upper surface of a sponge/applicator means and, preferably, further **characterised in that** in the reservoir/pouch is bonded to said upper surface.

11. A reservoir/pouch as claimed in claim 1 **characterised in that** it is refillable with washing/cleansing/treatment agent or material.

12. A reservoir/pouch as claimed in claim 1 **characterised in that** it is of a substantial size (perhaps 30% to 100% the volume of the sponge/applicator means) and/or spans (or perhaps 30% to 100%) substantially an upper surface of the sponge/applicator means.

13. A reservoir/pouch as claimed in claim 1 **characterised by** a control button being provided to release or help release said agent/material.

## Patentansprüche

1. Ein Behälter 101 oder ein Beutel, der bei Verwendung an einen Schwamm 102 oder ein Wasch-/Reinigungsapplikatormittel gebunden oder damit verbunden ist, wobei der Behälter/Beutel 101 einen Einlass 101c zum Aufnehmen eines Säuberungs- oder Wasch- oder Behandlungsmittels oder -materials und mindestens ein(e) Auslassdüse 101e oder -ventil, durch die/das das Mittel/Material ausgegeben werden kann, aufweist und wobei der Behälter/Beutel 101 einen Handgriffabschnitt 101a, der den Schwamm/das Applikatormittel 102 hält oder sichert, aufweist, wobei der Handgriffabschnitt 101a mit einer Aussparung 101b oder Vertiefung zum enganliegenden Aufnehmen des Schwamms oder des Wasch-/Reinigungsapplikatormittels 102 versehen ist, und **dadurch gekennzeichnet, dass** der Behälter 101 oder Beutel bei Drücken flexibel oder zusammenfaltbar ist, um dabei zu helfen, das Säuberungs- oder Wasch- oder Behandlungsmittel/-material aus dem Behälter/Beutel 101 aus der/dem mindestens einen Auslassdüse 101e oder -ventil auf oder in den Schwamm/das Applikatormittel 102 auszugeben.

2. Behälter/Beutel gemäß Anspruch 1, **dadurch gekennzeichnet, dass** der Schwamm/das Applikatormittel in dem Handgriffabschnitt entfernbar sicherbar ist.

3. Behälter/Beutel gemäß Anspruch 1 oder Anspruch 2, **dadurch gekennzeichnet, dass** sich die Aussparung/Vertiefung auf der Unterseite des Handgriffabschnitts befindet.

4. Behälter/Beutel gemäß Anspruch 1, **dadurch gekennzeichnet, dass** sich der Einlass auf einem oberen Teil des Behälters/Beutels befindet.

5. Behälter/Beutel gemäß Anspruch 1, **dadurch gekennzeichnet, dass** die/das mindestens eine Auslassdüse oder -ventil bei Verwendung auf einem dem Schwamm/Applikatormittel benachbarten unteren Teil des Behälters/Beutels liegt.

6. Behälter/Beutel gemäß Anspruch 1, **dadurch gekennzeichnet, dass** der Behälter/Beutel an den Handgriffabschnitt gebunden oder angeformt ist.

7. Behälter/Beutel gemäß Anspruch 1, **dadurch gekennzeichnet, dass** der Behälter/Beutel als eine integrale einteilige Einheit oder als eine zweiteilige Anordnung (separate Behälter-/Beutel- und Handgriffteile) gefertigt ist, wobei der Behälter/Beutel vorzugsweise auf dem Handgriffabschnitt auswechselbar ist.

8. Behälter/Beutel gemäß Anspruch 1, **dadurch gekennzeichnet, dass** der Schwamm/das Applikatormittel von dem Handgriffabschnitt entfernbar ist, um das Auswechseln zu gestatten, wenn er/es abgenutzt oder verdreckt ist, oder permanent daran gebunden ist.

9. Behälter/Beutel gemäß Anspruch 1, **dadurch gekennzeichnet, dass** der Handgriffabschnitt aus Silikon oder anderen Kunststoffen/elastischen Polymeren hergestellt ist.

10. Behälter/Beutel gemäß Anspruch 1, **dadurch gekennzeichnet, dass** er bei Verwendung mit einer oberen Oberfläche eines Schwamms/Applikatormittels verbunden ist, und vorzugsweise ferner **dadurch gekennzeichnet, dass** der Behälter/Beutel an die obere Oberfläche gebunden ist.

11. Behälter/Beutel gemäß Anspruch 1, **dadurch gekennzeichnet, dass** er mit einem Wasch-/Säuberungs-/Behandlungsmittel oder -material wiederauffüllbar ist.

12. Behälter/Beutel gemäß Anspruch 1, **dadurch gekennzeichnet, dass** er wesentlicher Größe ist (vielleicht 30 % bis 100 % des Volumens des Schwamms/Applikatormittels) und/oder sich im Wesentlichen (oder vielleicht 30 % bis 100 %) über eine obere Oberfläche des Schwamms/Applikatormittels erstreckt.

13. Behälter/Beutel gemäß Anspruch 1, **dadurch gekennzeichnet, dass** ein Bedienungsknopf bereitgestellt wird, um das Mittel/Material freizugeben oder dabei zu helfen, es freizugeben.

## Revendications

1. Un réservoir 101 ou une poche lié(e) ou raccordé(e), en utilisation, à une éponge 102 ou à un moyen applicateur pour lavage/nettoyage, ledit réservoir/ladite poche 101 ayant un orifice d'entrée 101c destiné à recevoir un agent ou matériau de récurage ou lavage ou traitement et au moins une buse de sortie 101e ou valve à travers laquelle ledit agent/matériau peut être distribué et le réservoir/la poche 101 ayant une portion de préhension manuelle 101a qui tient ou maintient l'éponge/le moyen applicateur 102, ladite portion de préhension manuelle 101a étant pourvue d'un renfoncement 101b ou d'une cavité destiné(e) à recevoir au plus juste l'éponge ou le moyen applicateur pour lavage/nettoyage 102, et caractérisé(e) en ce que le réservoir 101 ou la poche est souple ou pliable sous la pression pour aider à distribuer l'agent/le matériau de récurage ou lavage ou traitement à partir du réservoir/de la poche 101 depuis ladite au moins une buse de sortie 101e ou valve jusque sur ou jusque dans ladite éponge/ledit moyen applicateur 102.

2. Un réservoir/une poche tel/telle que revendiqué(e) dans la revendication 1 caractérisé(e) en ce que l'éponge/le moyen applicateur peut être maintenu(e) de façon amovible dans la portion de préhension manuelle.

3. Un réservoir/une poche tel/telle que revendiqué(e) dans la revendication 1 ou la revendication 2 caractérisé(e) en ce que le renfoncement/la cavité se situe sur le dessous de la portion de préhension manuelle.

4. Un réservoir/une poche tel/telle que revendiqué(e) dans la revendication 1 caractérisé(e) en ce que l'orifice d'entrée se situe sur une partie supérieure du réservoir/de la poche.

5. Un réservoir/une poche tel/telle que revendiqué(e) dans la revendication 1 caractérisé(e) en ce que ladite au moins une buse de sortie ou valve se trouve sur une partie inférieure du réservoir/de la poche adjacente à l'éponge/au moyen applicateur, en utilisation.

6. Un réservoir/une poche tel/telle que revendiqué(e) dans la revendication 1 caractérisé(e) en ce que le réservoir/la poche est lié(e) ou moulé(e) à la portion de préhension manuelle.

7. Un réservoir/une poche tel/telle que revendiqué(e) dans la revendication 1 caractérisé(e) en ce que le réservoir/la poche est fabriqué(e) sous la forme d'une unité d'une seule pièce ou sous la forme d'un ensemble en deux parties (parties réservoir/poche et de préhension manuelle séparées), ledit réservoir/ladite poche étant de préférence remplaçable sur la portion de préhension manuelle.

8. Un réservoir/une poche tel/telle que revendiqué(e) dans la revendication 1 caractérisé(e) en ce que l'éponge/le moyen applicateur peut être retiré(e) de la portion de préhension manuelle pour permettre son remplacement en cas d'usure ou de saletés ou est lié(e) à celle-ci de façon permanente.

9. Un réservoir/une poche tel/telle que revendiqué(e) dans la revendication 1 caractérisé(e) en ce que la portion de préhension manuelle est faite en silicone ou autres matériaux plastiques/élastomères.

10. Un réservoir/une poche tel/telle que revendiqué(e) dans la revendication 1 caractérisé(e) par le fait d'être, en utilisation, raccordé(e) à une surface supérieure d'une éponge/d'un moyen applicateur et, de préférence, caractérisé(e) en outre en ce que le réservoir/la poche est lié(e) à ladite surface supérieure.

11. Un réservoir/une poche tel/telle que revendiqué(e) dans la revendication 1 caractérisé(e) en ce qu'il/elle peut être rempli(e) à nouveau avec un agent ou matériau de lavage/récurage/traitement.

12. Un réservoir/une poche tel/telle que revendiqué(e) dans la revendication 1 caractérisé(e) en ce qu'il/elle présente une taille substantielle (peut-être 30 % à 100 % du volume de l'éponge/du moyen applicateur) et/ou recouvre (ou peut-être 30 % à 100 %) substantiellement une surface supérieure de l'éponge/du moyen applicateur.

13. Un réservoir/une poche tel/telle que revendiqué(e) dans la revendication 1 caractérisé(e) par le fait qu'un bouton de commande est prévu pour délivrer ou aider à délivrer ledit agent/matériau.
